# EUROPÄISCHE PATENTANMELDUNG

(11) **EP 4 014 747 A1**
(43) Veröffentlichungstag der Anmeldung: **22.06.2022**
(21) Anmeldenummer: 20215170.0
(22) Anmeldetag: 17.12.2020
(51) Int. Cl.: A23G 9/44, A23G 9/28, A23G 9/22, A23G 9/08

(54) **SYSTEM UND VERFAHREN ZUR HERSTELLUNG VON SPAGHETTIEIS UND ZUGEHÖRIGE SPAGHETTIEISMASCHINE UND EISKARTUSCHE**

(71) Anmelder: Grohe, Oliver, 72275 Alpirsbach (DE)
(72) Erfinder: Grohe, Oliver, 72275 Alpirsbach (DE)
(74) Vertreter: Kohler Schmid Möbus Patentanwälte

(57) **Zusammenfassung**

Das erfindungsgemäße System (1) zur Herstellung von Spaghettieis umfasst
- mindestens eine mit Eiscreme (4) befüllbare oder gefüllte, rohrförmige Eiskartusche (3),
- eine Spaghettieismaschine (2) zur Herstellung von Spaghettieis mit einer Kartuschenaufnahme (5) in Form eines Rings oder Rohrstücks zum Einsetzen, insbesondere Einhängen, der Eiskartusche (3) und mit einem Hubantrieb (6) zum Auf- und Abbewegen eines Kolbens (7), und
- eine kartuschenseitige Lochplatte (8),
wobei der Kolbendurchmesser (D) dem Innendurchmesser (d) der Eiskartusche (3) entspricht, um durch einen Abwärtshub des Kolbens (7) die Eiscreme (4) aus der in die Spaghettieismaschine (2) eingesetzten Eiskartusche (3) nach unten durch die Lochplatte (8) hindurchzupressen.

## Beschreibung

Die Erfindung betrifft ein System und ein Verfahren zur Herstellung von Spaghettieis sowie eine zugehörige Spaghettieismaschine und Eiskartusche.

Herkömmliche Spaghettieismaschinen bestehen aus einer Pressvorrichtung mit einem Behältnis für Eiscreme. Bei diesen Maschinen wird die Eiscreme von Hand portioniert, in das Behältnis gegeben und unmittelbar danach die Pressvorrichtung betätigt, und zwar entweder durch reine Muskelkraft mittels eines Hebelarms oder mittels eines pneumatischen, hydraulischen oder elektromotorischem Antriebs. Bei diesen Maschinen kann nur eine vorher eingelegte Eiscremeportion gepresst werden, wobei dann auch aufgrund des ständigen Wiederbefüllens von neuen Eiscremeportionen eine hohe Zeitspanne nur für das Auffüllen benötigt wird. Damit sich die Eiscreme nicht erwärmt, muss die Eiscreme unmittelbar nach ihrem Einfüllen in die Maschine gepresst werden.

Demgegenüber liegt der vorliegenden Erfindung die Aufgabe zugrunde, ein System und ein Verfahren zur vereinfachten Herstellung von Spaghettieis anzugeben.

Diese Aufgabe wird erfindungsgemäß gelöst durch ein System zur Herstellung von Spaghettieis, aufweisend
- mindestens eine mit Eiscreme füllbare oder gefüllte, rohrförmige Eiskartusche,
- eine Spaghettieismaschine zur Herstellung von Spaghettieis mit einer Kartuschenaufnahme in Form eines Rings oder (geraden) Rohrstücks zum Einsetzen, insbesondere Einhängen, der Eiskartusche und mit einem Hubantrieb zum Auf- und Abbewegen eines Kolbens, und
- eine kartuschen- oder maschinenseitige Lochplatte,
wobei der Kolbendurchmesser dem Innendurchmesser der Eiskartusche entspricht, um durch einen Abwärtshub des Kolbens Eiscreme aus der in die Spaghettieismaschine eingesetzten Eiskartusche nach unten durch die Lochplatte hindurchzupressen.

Im Gegensatz zu herkömmlichen Spaghettieismaschinen kann die Eiscreme erfindungsgemäß in der Eiskartusche auf Vorrat kühl gehalten und gelagert werden. In der Eiskartusche sind entweder eine einzige Eisportion (Einzelportion) oder aber mehrere Eisportionen aufgenommen, wobei im letzteren Fall das Spaghettieis portionsweise aus der Eiskartusche gepresst wird.

Vorzugsweise ist die Kartuschenaufnahme zwischen einer Arbeitsstellung zum Herauspressen von Eiscreme aus der Eiskartusche und einer Be-/Entladestellung, in der die Eiskartusche in die Kartuschenaufnahme eingesetzt oder entnommen werden kann, bewegbar gelagert, insbesondere schwenk- bzw. nach vorne kippbar gelagert oder alternativ verschiebbar bzw. steckbar. Alternativ kann die Kartuschenaufnahme fest am Gehäuse befestigt sein und ein den Kolben tragender Gehäusekopf zwischen der Arbeitsstellung und der Be-/Entladestellung bewegbar gelagert sein.

Alternativ kann die Spaghettieismaschine auch einen drehbaren Kartuschenrevolver mit mehreren in Drehrichtung des Kartuschenrevolvers nebeneinander angeordneten Kartuschenaufnahmen in Form von Ringen oder (geraden) Rohrstücken zum Einsetzen, insbesondere Einhängen, von Eiskartuschen aufweisen, wobei nur aus derjenigen Eiskartusche Eiscreme herausgepresst wird, deren Kartuschenaufnahme in eine Arbeitsstellung der Spaghettieismaschine gedreht ist. Dies hat den Vorteil, dass man schneller und flexibler arbeiten kann und zum Wechseln der Eiskartuschen die Kartuschenaufnahme nicht in die Be-/Entladestellung kippen muss. Im Falle von Lochplatten an den unteren Enden der Kartuschenaufnahmen können die Lochplatten unterschiedliche Lochquerschnitte aufweisen, um nicht nur zwischen unterschiedlichen Eissorten der eingesetzten Eiskartuschen zu wechseln, sondern auch zwischen unterschiedlichen Spaghettieis-Strangquerschnitten. Am Hubantrieb sollte bevorzugt ein Sensor angebracht sein, der in den verschiedenen Eiskartuschen des Kartuschenrevolvers die jeweils aktuelle Hubhöhe des Kolbens erfasst und speichert, so dass nach Drehen des Kartuschenmagazins der Kolbenhub ab der für die aktuell in Arbeitsstellung befindliche Eiskartusche gespeicherten Hubhöhe begonnen wird. Es kann sich auch eine Füllstandsanzeige in Form einer Leuchtanzeige (z.B. LED) oder in Form eines Displays vorhanden sein.

Um die Kartusche in die Kartuschenaufnahme einzuhängen, weist vorteilhaft eines der beiden Kartuschenenden der Eiskartusche einen radial nach außen vorstehenden Kartuschenrand auf, mit dem die eingesetzte Eiskartusche oben auf der Kartuschenaufnahme aufliegt.

Die Lochplatte kann entweder stationär an dem unteren Ende der Kartuschenaufnahme oder an einem der beiden Kartuschenenden der Eiskartusche angeordnet sein. Im ersteren Fall ist die Lochplatte bevorzugt lösbar mit der Kartuschenaufnahme verbunden, z.B. angeschraubt, um ein Reinigen der Lochplatte zu ermöglichen.

Der Kolben ist vorzugsweise am Hubantrieb befestigt, aber kann, insbesondere bei Einzelportion-Eiskartuschen, auch in die Eiskartusche integriert sein und erst in der Arbeitsstellung der Kartuschenaufnahme mit dem Hubantrieb gekoppelt werden. Der Hubantrieb kann eine Handhabe zum manuellen Auf- und Abbewegen des Kolbens oder einen pneumatischen, hydraulischen oder elektromotorischen Antrieb zum Auf- und Abbewegen des Kolbens aufweist. Der Kolbenhub ist vorab festgelegt und entspricht bei einer Portion Spaghettieis, also im Falle einer Einportion-Eiskartusche der Kartuschengesamtlänge und im Falle einer Mehrportionen-Eiskartusche jeweils der einer Portion Spaghettieis entsprechenden Kartuschenteillänge. Ist der Kolben nach der entsprechenden Anzahl an Hüben an seiner untersten Endlage angekommen oder wird ein entsprechender Knopf zur Aufwärtsbewegung gedrückt, fährt der Hubantrieb den Kolben bis zur obersten Endlage hoch, um die Eiskartusche auswechseln zu können. Alternativ kann die Aufwärtsbewegung auch durch einen Sensor eingeleitet werden, welcher die unterste Endlage erkennt, so dass nach vollständigem Entleeren der Eiskartusche der Kolben automatisch wieder nach oben in seine oberste Endlage fährt. Im Gegensatz zu herkömmlichen Spaghettieismaschinen, bei denen die Eiscreme von Hand portioniert und dann von Hand gepresst werden muss, kann im Falle einer Mehrportionen-Eiskartusche erfindungsgemäß in der gleichen Zeit eine größere Menge an Pressungen durchgeführt werden. Ebenso können Kosten für Eiscreme eingespart werden, da die Pressmenge zuvor exakt festgelegt werden kann und somit eine bessere Kostenkalkulation möglich ist; zusätzlich zu den Kosten der Eiscreme werden auch Zeitkosten gesenkt.

Vorzugsweise weist die Spaghettieismaschine eine Kälteanlage auf, welche die Kartuschenaufnahme und damit die darin eingesetzte Eiskartusche auf einer zuvor definierten Temperatur hält. Die Kälteanlage kann beispielsweise ein Kühlmittel über Kühlleitungen zur Kartuschenaufnahme pumpen. Diese Kühlung erlaubt es, die Eiscreme in der eingesetzten Kartusche längere Zeit kühl zu halten und für den Fall einer Mehrportionen-Eiskartusche auf Vorrat für eine bevorstehende Pressung bereit zu halten, ohne dass für jeden einzelnen Pressvorgang eine neue Portion Eiscreme eingefüllt werden muss.

Besonders bevorzugt weist die Spaghettieismaschine, insbesondere die Kartuschenaufnahme, unterhalb der eingesetzten Eiskartusche einen querbeweglichen Schieber auf, um die aus der Lochplatte herausgedrückten Eisstränge abzuschaben. Der Schieber fährt nach Abschluss des Pressvorgangs unten quer über die Eiskartusche, um die Eisstränge abzuschaben. Im gleichen Zuge kann der Schieber auch bis zum nächsten Pressvorgang über der Eiskartusche verweilen, um als Schutzabdeckung gegen Schmutz zu dienen oder um das Auslaufen bzw. Tropfen zu verhindern. Der Schieber kann manuell oder elektrisch, z.B. über einen Spindelmotor, angetrieben werden. Der Schieber ist aus lebensmittelverträglichem Kunststoff, kann aber alternativ auch aus Edelstahl bestehen.

Die Erfindung betrifft weiterhin auch eine Spaghettieismaschine zur Herstellung von Spaghettieis mit einer Kartuschenaufnahme in Form eines Rings oder (geraden) Rohrstücks zum Einsetzen, insbesondere Einhängen, einer Eiskartusche und mit einem Hubantrieb zum Auf- und Abbewegen eines Kolbens, der Teil des Hubantriebs oder der eingesetzten Eiskartusche ist, um durch einen Abwärtshub des Kolbens die Eiscreme aus der in die Spaghettieismaschine eingesetzten Eiskartusche nach unten durch eine Lochplatte der Spaghettieismaschine oder der Eiskartusche hindurchzupressen.

Die Erfindung betrifft in einem weiteren Aspekt auch eine mit Eiscreme gefüllte, rohrförmige Eiskartusche mit zwei Kartuschenenden, von denen zumindest eines offen oder öffnenbar ist. Insbesondere im Falle einer Einzelportion-Eiskartusche kann das offene oder öffnenbare Kartuschenende durch einen Kolben verschlossen sein, der dann, wenn die Eiskartusche in die Spaghettieismaschine eingesetzt ist, mit dem Hubantrieb gekoppelt wird. Der Kolben selbst kann auch als Schutz für die dahinterliegende Eiscreme dienen. Das andere Kartuschenende ist ebenfalls offen oder öffnenbar oder weist eine integrierte Lochplatte auf. Wird die Eiskartusche (Einweg-Eiskapsel) zugekauft, so sind vorteilhaft das eine oder beide offenen Kartuschenende jeweils mit einer Abziehfolie verschlossen, die vor dem Einsetzen in die Spaghettieismaschine abgezogen wird. Nach dem Pressvorgang kann die leere Eiskartusche in der Wertstofftonne entsorgt werden.

Die Erfindung betrifft schließlich auch ein Verfahren zum Herstellen von SpaghettiEis mit einem wie oben beschriebenen System, wobei eine mit Eiscreme gefüllte Eiskartusche in die Kartuschenaufnahme eingesetzt wird und mittels des Kolbens eine gewünschte Menge an Eismasse aus der Eiskartusche nach unten durch die Lochplatte hindurchgedrückt wird. Die mit Eiscreme gefüllte Eiskartusche wird entweder im Eisfach kühl gelagert oder aber in der Kartuschenaufnahme kühl gehalten. Es können Eiskartuschen mit unterschiedlichen Eissorten bevorratet werden, wie z.B. Vanilleeis, Schokoeis usw. Die Kartuschen können untereinander beliebig gewechselt werden.

Vorzugsweise werden aus einer mehrere Eisportionen enthaltenden Eiskartusche mehrere stets gleiche Eisportionen herausgepresst, also stets die gleichen Kolbenhübe durchgeführt. Die Portionsmenge kann alternativ von einer integrierten Waage erfasst und dadurch der Kolbenhub geregelt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: ein erfindungsgemäßes System zur Herstellung von Spaghettieis mit einer Spaghettieismaschine in einer Arbeitsstellung (Fig. 1a) und in einer Be-/Entladestellung (Fig. 1b) zum Einsetzen bzw. Entnehmen einer Eiskartusche;
- Fig. 2: das Innenleben der in Fig.1 gezeigten Spaghettieismaschine; und
- Fig. 3: ein modifiziertes erfindungsgemäßes System zur Herstellung von Spaghettieis.

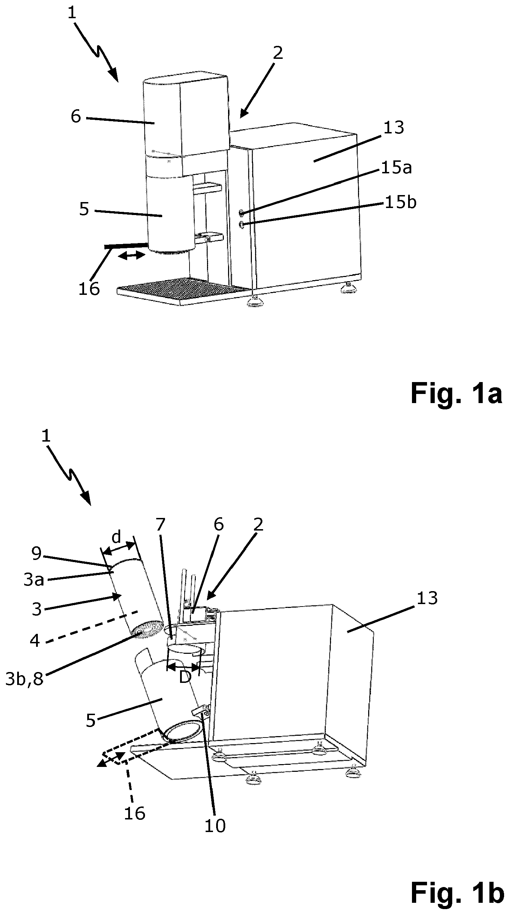

Das in **Fign. 1a, 1b** gezeigte System **1** zur Herstellung von Spaghettieis umfasst eine Spaghettieismaschine **2** und eine Eiskartusche **3,** die mit Eiscreme **4** gefüllt ist.

Die Spaghettieismaschine 2 weist eine Kartuschenaufnahme **5** in Form eines Rings oder geraden Rohrstücks, in die die Eiskartusche 3 von oben eingesetzt werden kann, und einen Hubantrieb **6** mit einem oberhalb der Kartuschenaufnahme 5 angeordneten, auf- und abbewegbaren Kolben **7** auf. Die Eiskartusche 3 ist rohrförmig mit zwei einander gegenüberliegenden Kartuschenenden **3a, 3b,** von denen das eine (obere) Kartuschenende 3a offen und das andere (untere) Kartuschenende 3b mit einer Lochplatte **8** verschlossen ist. Die Lochplatte 8 mit kreisrunden Löchern (alternativ auch andere Muster möglich - beispielsweiße Sterne oder ähnliches) kann beispielsweise in das Kartuschengehäuse eingeschraubt sein. Am oberen Kartuschenende 3a kann die Eiskartusche 3 einen radial nach außen vorstehenden Kartuschenrand **9** aufweisen, mit dem die eingesetzte Eiskartusche 3 oben auf der Kartuschenaufnahme 5 aufliegt bzw. eingehängt ist.

Die Kartuschenaufnahme 5 ist am unteren Ende mittels eines Gelenks **10** schwenkbar zwischen einer in Fig. 1a gezeigten, vertikalen Arbeitsstellung, in der die Achse der Kartuschenaufnahme 5 mit der Achse des Kolbens 7 fluchtet, und einer in Fig. 1b gezeigten, nach vorne gekippten Be-/Entladestellung gelagert, in der die Eiskartusche 3 in die Kartuschenaufnahme 5 eingesetzt oder entnommen werden kann. Alternativ kann die Kartuschenaufnahme 5 auch von der Arbeitsstellung in die Be-/Entladestellung verschiebbar oder steckbar ausgebildet sein.

Der Kolbendurchmesser **D** entspricht dem Innendurchmesser **d** der Eiskartusche 3, um in der Arbeitsstellung durch einen Abwärtshub des Kolbens 7 in die eingesetzte Eiskartusche 3 hinein die Eiscreme 4 aus der Eiskartusche 3 nach unten durch die Lochplatte 8 hindurchzupressen und so das Spaghettieis zu erzeugen.

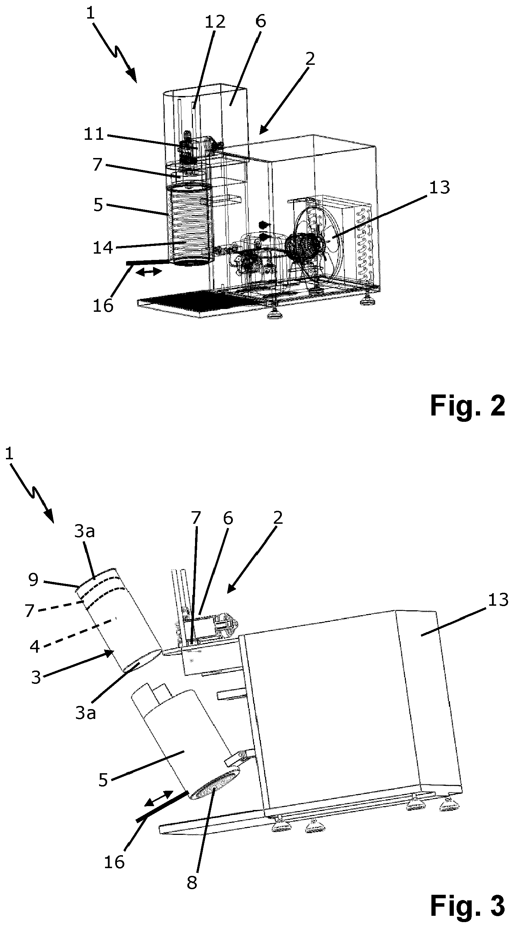

Der Hubantrieb 6 kann eine Handhabe zum manuellen Auf- und Abbewegen des Kolbens 7 oder aber, wie in **Fig. 2** gezeigt, einen Antriebsmotor **11** zum elektromotorischen Auf- und Abbewegen des Kolbens 7 aufweisen. Dazu kann der Kolben 7 im Gehäuse der Spaghettieismaschine 2 höhenverschiebbar, aber unverdrehbar geführt und mittels mindestens einer, hier zwei Antriebspindeln **12,** welche im Kolben 7 eingeschraubt sind und vom Antriebsmotor 11 gedreht werden, in der Höhe verstellt werden.

Die Spaghettieismaschine 2 weist optional eine Kälteanlage **13** zum Kühlen der eingesetzten Eiskartusche 3 auf. Dazu kann die Kartuschenaufnahme 5 Kühlleitungen **14** aufweisen, die an die Kälteanlage 13 angeschlossen sind.

Unten an der Kartuschenaufnahme 5 ist ein in Pfeilrichtung horizontal verschiebbarer Schieber **16** angeordnet, um die aus der Lochplatte 8 herausgedrückten Eisstränge abzuschaben.

Vom System der Fign. 1 und 2 unterscheidet sich das in **Fig. 3** gezeigte System 1 lediglich dadurch, dass hier die untere Öffnung der Kartuschenaufnahme 5 die Lochplatte 8 aufweist und beide Kartuschenende 3a, 3b der Eiskartusche 3 offen bzw. mit einer Abziehfolie (nicht gezeigt) verschlossen sind.

Statt am Hubantrieb 6 befestigt, kann der Kolben 7, wie beispielhaft in Fig. 3 gestrichelt angedeutet, alternativ auch in die Eiskartusche 3 integriert sein und das obere Kartuschenende 3a verschließen, um dann erst in der Arbeitsstellung mit dem Hubantrieb 6 gekoppelt zu werden.

Die Funktionsweise des Systems 1 ist wie folgt:
Wird ein erster Knopf/Taste **15a** zum Pressen betätigt, wird der Kolben 7 aus seiner Ausgangsstellung um einen vorher festgelegten Kolbenhub abgesenkt. Optional kann auch noch eine Taste vorhanden sein, mit der der Kolben 7 stufenlos abgesenkt wird. Ist der festgelegte Kolbenhub erreicht, leuchtet eine Leuchte, die anzeigt, dass man den Schieber 16 vor die Lochplatte 8 schieben kann, um die Eisstränge abzuschaben. Bei einer komplett elektromechanischen Version wird nach dem Erreichen des festgelegten Kolbenhubs der Schieber 20 oder die Eiskartusche 3 über einen Elektromotor über die Kartuschenunterseite geschoben und so die Eisstränge abgeschabt. Im Fall einer Mehrfachportion-Eiskartusche 3 wird dieser Absenkvorgang wiederholt, bis die gesamte Eiscreme 4 aus der Eiskartusche 3 herausgepresst worden ist. Wird anschließend ein zweiter Knopf/Taste **15b** zum Hochfahren des Kolbens 7 betätigt, wird der Kolben 7 in einem Zug nach oben in seine Ausgangsstellung angehoben.

In einer nicht gezeigten Ausführungsform des erfindungsgemäßen Systems weist die Spaghettieismaschine 2 einen um eine vertikale Achse drehbaren Kartuschenrevolver mit mehreren, in Drehrichtung des Kartuschenrevolvers nebeneinander angeordneten Kartuschenaufnahmen in Form von Ringen oder geraden Rohrstücken zum Einsetzen, insbesondere Einhängen, von Eiskartuschen 3 auf. Nur aus derjenigen Eiskartusche 3, deren Kartuschenaufnahme 5 in die Arbeitsstellung unterhalb des Kolbens 7 gedreht worden ist, kann Eiscreme 4 herausgepresst werden.

## Patentansprüche

1. System (1) zur Herstellung von Spaghettieis, aufweisend
- mindestens eine mit Eiscreme (4) befüllbare oder gefüllte, rohrförmige Eiskartusche (3),
- eine Spaghettieismaschine (2) zur Herstellung von Spaghettieis mit einer Kartuschenaufnahme (5) in Form eines Rings oder Rohrstücks zum Einsetzen, insbesondere Einhängen, der Eiskartusche (3) und mit einem Hubantrieb (6) zum Auf- und Abbewegen eines Kolbens (7), und
- eine kartuschen- oder maschinenseitige Lochplatte (8),
wobei der Kolbendurchmesser (D) dem Innendurchmesser (d) der Eiskartusche (3) entspricht, um durch einen Abwärtshub des Kolbens (7) die Eiscreme (4) aus der in die Spaghettieismaschine (2) eingesetzten Eiskartusche (3) nach unten durch die Lochplatte (8) hindurchzupressen.

2. System nach Anspruch 1, **dadurch gekennzeichnet, dass** die Kartuschenaufnahme (5) zwischen einer Arbeitsstellung zum Herauspressen von Eiscreme (4) aus der Eiskartusche (3) und einer Be-/Entladestellung, in der die Eiskartusche (3) in die Kartuschenaufnahme (5) eingesetzt oder entnommen werden kann, bewegbar gelagert ist, insbesondere verschiebbar oder schwenkbar gelagert ist.

3. System nach Anspruch 1, **dadurch gekennzeichnet, dass** die Eismaschine (2) einen drehbaren Kartuschenrevolver mit mehreren in Drehrichtung des Kartuschenrevolvers nebeneinander angeordneten Kartuschenaufnahmen (5) in Form von Ringen oder Rohrstücken zum Einsetzen, insbesondere Einhängen, von Eiskartuschen (3) aufweist und dass nur aus derjenigen Eiskartusche (3) Eiscreme (4) herausgepresst wird, deren Kartuschenaufnahme (5) in eine Arbeitsstellung der Spaghettieismaschine (2) gedreht ist.

4. System nach einem der vorhergehenden Ansprüche, **dadurch gekennzeichnet, dass** eines der beiden Kartuschenenden (3a, 3b) der Eiskartusche (3) einen radial nach außen vorstehenden Kartuschenrand (9) aufweist, mit dem die eingesetzte Eiskartusche (3) oben auf der Kartuschenaufnahme (5) aufliegt.

5. System nach einem der vorhergehenden Ansprüche, **dadurch gekennzeichnet, dass** die Lochplatte (8) an dem unteren Ende der Kartuschenaufnahme (5) oder an einem der beiden Kartuschenenden (3a, 3b) der Eiskartusche (3) angeordnet ist.

6. System nach einem der vorhergehenden Ansprüche, **dadurch gekennzeichnet, dass** der Kolben (7) am Hubantrieb (6) befestigt ist oder in die Eiskartusche (3) integriert und mit dem Hubantrieb (6) koppelbar ist.

7. System nach einem der vorhergehenden Ansprüche, **dadurch gekennzeichnet, dass** der Hubantrieb (6) eine Handhabe zum manuellen Auf- und Abbewegen des Kolbens (7) oder einen pneumatischen, hydraulischen oder elektromotorischen Antrieb zum Auf- und Abbewegen des Kolbens (7) aufweist.

8. System nach einem der vorhergehenden Ansprüche, **dadurch gekennzeichnet, dass** die Spaghettieismaschine (2) eine Kälteanlage (13) zum Kühlen der eingesetzten Eiskartusche (3) aufweist.

9. System nach einem der vorhergehenden Ansprüche, **dadurch gekennzeichnet, dass** die Spaghettieismaschine (2), insbesondere die Kartuschenaufnahme (5), unterhalb der eingesetzten Eiskartusche (3) einen querbeweglichen Schieber (16) aufweist, um die aus der Lochplatte (8) herausgedrückten Eisstränge abzuschaben.

10. Spaghettieismaschine (2) zur Herstellung von Spaghettieis mit einer Kartuschenaufnahme (5) in Form eines Rings oder Rohrstücks zum Einsetzen, insbesondere Einhängen, einer Eiskartusche (3) und mit einem Hubantrieb (6) zum Auf- und Abbewegen eines Kolbens (7), der Teil des Hubantriebs (6) oder der eingesetzten Eiskartusche (5) ist, um durch einen Abwärtshub des Kolbens (7) die Eiscreme (4) aus der in die Spaghettieismaschine (2) eingesetzten Eiskartusche (3) nach unten durch eine Lochplatte (8) der Spaghettieismaschine (2) oder der Eiskartusche (3) hindurchzupressen.

11. Mit Eiscreme (4) gefüllte, rohrförmige Eiskartusche (3) mit zwei Kartuschenenden (3a, 3b), von denen zumindest das eine Kartuschenende (3a) offen oder öffnenbar ist und das andere Kartuschenende (3b) offen oder öffnenbar ist oder eine Lochplatte (8) aufweist.

12. Eiskartusche nach Anspruch 10, **dadurch gekennzeichnet, dass** das offene oder öffnenbare Kartuschenende (3a) durch einen Kolben (7) verschlossen ist.

13. Eiskartusche nach Anspruch 11 oder 12, **dadurch gekennzeichnet, dass** das mindestens eine offene Kartuschenende (3a), insbesondere beide Kartuschenenden (3a, 3b), mit einer Abziehfolie verschlossen sind.

14. Verfahren zum Herstellen von Spaghettieis mit einem System (1) nach einem der Ansprüche 1 bis 9, **dadurch gekennzeichnet, dass** eine mit Eiscreme (4) gefüllte Eiskartusche (3) nach einem der Ansprüche 11 bis 13 in die Kartuschenaufnahme (2) einer Spaghettieismaschine (2) nach Anspruch 10 eingesetzt wird und mittels des Kolbens (7) eine gewünschte Menge an Eiscreme (4) aus der Eiskartusche (3) durch die Lochplatte (8) nach unten hindurchgedrückt wird.

15. Verfahren nach Anspruch 14, **dadurch gekennzeichnet, dass** aus der Eiskartusche (3) mehrere stets gleiche Eisportionen herausgepresst werden.
